# EUROPÄISCHE PATENTSCHRIFT

(11) **EP 1 516 782 B1**
(45) Veröffentlichungstag und Bekanntmachung des Hinweises auf die Patenterteilung: **20.12.2006**
(21) Anmeldenummer: 03405684.6
(22) Anmeldetag: 19.09.2003
(51) Int. Cl.: B60Q 1/076

(54) **Stellantrieb für eine Scheinwerfereinheit**
Actuator for a headlamp
Actionneur de commande de position pour projecteur

(43) Veröffentlichungstag der Anmeldung: 23.03.2005
(73) Patentinhaber: SAIA-Burgess Murten AG, 3280 Murten (CH)
(72) Erfinder: Franchi, Nicolas, 1763 Granges-Paccot (CH); Bourqui, Yvan, 1720 Corminboeuf (CH)
(74) Vertreter: AMMANN PATENTANWÄLTE AG BERN

(56) Entgegenhaltungen:
- EP-A- 0 370 420
- EP-A- 0 595 397
- EP-A- 1 099 839
- EP-A- 1 234 716
- DE-A- 10 102 686
- US-A1- 2002 163 814
- PATENT ABSTRACTS OF JAPAN vol. 018, no. 283 (M-1613), 30. Mai 1994 (1994-05-30) & JP 06 050392 A (SONY CORP), 22. Februar 1994 (1994-02-22)
- PATENT ABSTRACTS OF JAPAN vol. 2000, no. 20, 10. Juli 2001 (2001-07-10) & JP 2001 063453 A (STANLEY ELECTRIC CO LTD), 13. März 2001 (2001-03-13)

## Beschreibung

Die vorliegende Erfindung betrifft einen Stellantrieb für eine Scheinwerfereinheit gemäss dem Oberbegriff von Anspruch 1.

Ein Scheinwerfer ist eine Lampe mit gerichteter Leuchtcharakteristik. Fahrzeuge werden mit Scheinwerfern ausgestattet, um nachts oder bei schlechter Sicht den Fahrweg auszuleuchten. Eine bekannte Massnahme zur Verbesserung der Fahrwegbeleuchtung besteht darin, die Scheinwerfer schwenkbar zu befestigen und sie mit einem Stellantrieb zu kombinieren, so dass die Leuchtrichtung der aktuellen Fahrsituation angepasst werden kann. Bei Strassenfahrzeugen wird die Leuchtrichtung in der Regel dem Lenkeinschlag der Vorderräder nachgeführt, um beim Befahren von Kurven eine gute Ausleuchtung der Strasse zu gewährleisten.

In der Offenlegungsschrift DE 101 02 686 A1 ist eine Scheinwerfereinheit beschrieben, deren Scheinwerfer über ein Reduktionsgetriebe mit einem Stellmotor verbunden ist. Ein Nachteil dieser Konstruktion ist das laterale und rotative Spiel der Abtriebswelle dieses Getriebes, welches Vibrationen des damit gekoppelten Scheinwerfers begünstigt und so zu einer für den Fahrer störenden Vibration des Lichtkegels führt.

Eine Aufgabe der Erfindung besteht darin, die Vibrationen des Scheinwerfers in einer Scheinwerfereinheit mit Stellantrieb auf ein Minimum zu reduzieren. Diese Aufgabe wird mit einem Stellantrieb gemäss Patentanspruch 1 gelöst. Bevorzugte Ausführungsformen sind in den abhängigen Patentansprüchen angegeben.

Der Stellantrieb verfügt über ein ein- oder mehrstufiges Reduktionsgetriebe mit einer das Spiel der Abtriebswelle stark reduzierenden, letzten Getriebestufe: Parallel zu einem fest mit der Abtriebswelle des Getriebes verbundenen Abtriebsrad ist ein frei um dieselbe Achse drehbar gelagertes Spannrad mit gleichem Durchmesser vorgesehen. Das Abtriebsrad und das Spannrad sind Zahnräder mit gleichartigen Verzahnungen. Durch mindestens ein zwischen den beiden Rädern wirkendes Spannelement sind diese mit gegenläufigen Drehmomenten beaufschlagt, das heisst das Spannelement wirkt auf eine Verdrehung des Spannrads gegenüber dem Abtriebsrad hin. Die Räder stehen jedoch beide mit demselben Ritzel in Eingriff, so dass ihre Verzahnungen aufeinander ausgerichtet sind und die Verdrehung des Spannrads gegenüber dem Abtriebsrad auf den Betrag des Zahnflankenspiels beschränkt bleibt: Der in Eingriff stehende Ritzelzahn ist zwischen einen Zahn des Abtriebsrads und einen Zahn des Spannrads eingeklemmt und das Zahnflankenspiel ist somit aufgehoben.

In Hochpräzisionsantrieben, wie dem in der EP-641621 beschriebenen Spindelantrieb für eine Funkenerosionsmaschine, werden derartige Getriebe bereits eingesetzt. Hingegen ist bei dem Stellantrieb für eine Scheinwerfereinheit die Präzision des Antriebs als solchem absolut nebensächlich, die Aufgaben zu deren Lösung solche Getriebe bisher eingesetzt wurden, haben mit der vorliegenden Erfindung keine Gemeinsamkeiten.

Haben die Lager der Abtriebswelle auch radiales Spiel, so bringt die vorgespannte, letzte Getriebestufe auch diesbezüglich eine Stabilisierung der Abtriebswelle: Den üblicherweise verwendeten Evolventenverzahnungen und allgemein allen Radialverzahnungen ist gemeinsam, dass zwei benachbarte Zähne eines Rads am Kopfkreis weiter voneinander entfernt sind als am Fusskreis und dass sich die ineinandergreifenden Zähne von zwei Zahnrädern irgendwo zwischen Kopf- und Fusskreis berühren. Aufgrund dieser Geometrie erzeugt die vom Spannelement ausgehende Spannkraft an den Flanken des in Eingriff stehenden Ritzelzahns eine radiale Reaktionskraft, die Abtriebswelle wird vom Ritzel weggedrückt. Die damit verbundene, radiale Belastung der Abtriebswelle bewirkt, dass diese auf die vom Ritzel abgewandte Seite ihrer Lagerschale gedrückt wird.

Als Lagerschale wird hier allgemein der äussere Ring eines Radiallagers bezeichnet. Bei einem Wälzlager sind zwischen der Lagerschale und der darin gelagerten Welle Wälzkörper vorgesehen, wogegen bei einem Gleitlager die Welle direkt mit der Lauffläche der Lagerschale in Kontakt ist. Das radiale Lagerspiel ist von der Bauart des Lagers und den Dimensionen der Lagerkomponenten abhängig. Bei einem Gleitlager entspricht es der Differenz zwischen den Durchmessern der Laufschale und der darin gelagerten Abtriebswelle.

Das radiale Spiel der Abtriebswelle ist deren freies Spiel, das heisst der Bereich in dem sich diese Welle mit relativ geringem Kraftaufwand bewegen lässt, so dass sie vibrieren kann. Dieses radiale Spiel der Abtriebswelle wird zunächst durch das Spiel ihrer Lager begrenzt. Das so definierte Maximalspiel der Abtriebswelle wird durch die vorgespannte, letzte Getriebestufe jedoch stark reduziert, da die Abtriebswelle, wie bereits erläutert, auf die vom Ritzel abgewandte Seite ihrer Lagerschale gedrückt wird. Durch diese Reduktion des radialen Spiels und die gleichzeitige Aufhebung des Zahnflankenspiels wird die Abtriebswelle umfassend stabilisiert und Vibrationen dieser Welle werden so verhindert.

Aus Kostengründen werden bevorzugt Gleitlager eingesetzt, die immer ein gewisses radiales Spiel aufweisen. Da sich die Abtriebswelle ziemlich langsam dreht ist bei diesen Gleitlagern keine besondere Schmierung nötig und das Lagerspiel kann, unabhängig von den für das Lager verwendeten Materialien, ziemlich klein sein. Je kleiner dieses Lagerspiel ist, desto grössere Präzision verlangt jedoch die Produktion (Dimensionen und Oberflächenqualität) und Montage dieser Lager. Im Interesse einer rationellen Produktion des Stellantriebs werden die Lager der Abtriebswelle daher bevorzugt so gefertigt, dass sie ein radiales Spiel von mindestens 0.05 mm und besonders bevorzugt ein solches Spiel von mindestens 0.2 mm aufweisen.

Hat der Stellantrieb ein Gehäuse, so können die Lagerschalen als integraler Bestandteil des Gehäuses ausgebildet werden, das heisst es wird auf präzise, in das Gehäuse eingesetzte Lagerbüchsen verzichtet und die Lagerschalen werden statt dessen durch einfache Löcher im Gehäuse gebildet. Die Lagerschalen bestehen also aus demselben Material wie das Gehäuse und sie werden mit diesem in einem Stück geformt. Es versteht sich, dass das Gehäuse nicht nur aus einem sondern auch aus mehreren (üblicherweise zwei) Teilen bestehen kann, so dass die Lagerschalen, allgemein formuliert, integrale Bestandteile von einem oder mehreren Gehäuseteilen sein können.

Bevorzugt werden die betreffenden Gehäuseteile und mit ihnen die Lagerschalen aus Kunststoff gespritzt, so dass auf eine spanende Nachbearbeitung der Laufflächen der Lagerschalen verzichtet werden kann. Am einfachsten gestaltet sich die Produktion, wenn sämtliche Gehäuseteile aus Kunststoff gespritzt werden.

Bevorzugt wird ein geschlossenes Gehäuse verwendet, in dem sowohl das Reduktionsgetriebe als auch der Rotationsmotor vor Schmutz oder anderen äusseren Einflüssen geschützt untergebracht sind. Es könnte aber auch ein teilweise oder gar weitgehend offenes Gehäuse verwendet werden, das im Extremfall auf eine der Befestigung der verschiedenen Teile des Stellantriebs dienende, tragende Struktur reduziert sein kann.

Zur Verbindung der Abtriebswelle mit dem Scheinwerfer ist in der Gehäusewand eine Öffnung vorgesehen, wobei in der Regel ein Ende der Abtriebswelle durch diese Öffnung nach aussen ragt. Bevorzugt wird diese Öffnung durch eine im Wandbereich eines Gehäuseteils angeordnete, gleichzeitig der Lagerung der Abtriebswelle dienende Lagerschale gebildet.

Die mit der vorgespannten letzten Getriebestufe erzielte Vermeidung von Vibrationen ist insbesondere dann beachtlich, wenn die Abtriebswelle relativ dünn und somit leicht ist, so dass sie Vibrationen nicht schon mit der Trägheit ihrer Masse entgegenwirkt. Für den Stellantrieb einer Scheinwerfereinheit wird, wie im Fahrzeugbau allgemein und im Automobilbau im Besonderen, eine leichte und kompakte Bauweise angestrebt. Bevorzugt wird daher eine möglichst dünne Abtriebswelle verwendet, die aber dennoch ausreichend Stabil sein muss. Bevorzugt wird eine Abtriebswelle verwendet, die einen Durchmesser von nicht mehr als 30 mm aufweist.

Aufgrund des für das Schwenken von Fahrzeugscheinwerfern bevorzugten, relativ geringen Schwenkbereichs können an Stelle des Abtriebsrads und des Spannrads auch Radsegmente ausreichender Grösse verwendet werden. Damit lassen sich die Dimensionen und das Gewicht des Stellantriebs vorteilhaft reduzieren. In allgemeiner Form wird nachstehend von der Abtriebsscheibe und der Spannscheibe gesprochen, die in einem gemeinsamen Wirksektor gleichartige Radialverzahnungen mit demselben konstanten Wirkradius aufweisen. Eine Radialverzahnung mit konstantem Wirkradius beschreibt einen Kreisbogen. Das bedeutet, dass die beiden Scheiben im Wirksektor die Form von Zahnradsegmenten aufweisen. Der Wirksektor ist beiden Scheiben gemeinsam, diese Zahnradsegmente sind also im montierten Zustand aufeinander ausgerichtet, so dass ihre Verzahnungen in diesem Sektor parallel zueinander verlaufen.

Der Sektorwinkel des Wirksektors stellt für den Schwenkbereich des Stellantriebs eine mechanische Obergrenze dar, bei deren Überschreitung die letzte Getriebestufe beschädigt werden kann. Bevorzugt wird der Schwenkbereich daher durch zusätzliche, mechanische und/oder elektrische Begrenzungsmittel auf einen Winkel beschränkt, der kleiner als der Wirksektor der Abtriebsscheibe und der Spannscheibe ist. Für die Scheinwerfereinheit eines Automobils ist zur verbesserten Ausleuchtung des Fahrwegs in Kurven ein Schwenkbereich von 60 Grad, also 30 Grad nach links und nach rechts, auf jeden Fall ausreichend. Bevorzugt wird ein Stellantrieb mit einem Schwenkbereich von höchstens 45 Grad verwendet.

Die Erfindung wird im Folgenden unter Bezugnahme auf die Zeichnungen anhand eines Ausführungsbeispiels näher erläutert. Es zeigen:
- Fig. 1: die Seitenansicht einer Scheinwerfereinheit;
- Fig. 2: den Stellantrieb dieser Scheinwerfereinheit bei abgenommener Bodenplatte in einer perspektivischen Darstellung von unten;
- Fig. 3: denselben Stellantrieb in der Ansicht von unten;
- Fig. 4: die Abtriebswelle dieses Stellantriebs mit der damit verbundenen Abtriebsscheibe und der zugehörigen, jedoch abgehoben dargestellten Spannscheibe;
- Fig. 5: die schematische Schnittdarstellung des Drehlagers der Abtriebswelle;
- Figg. 6a/6b: zwei weitere schematische Schnittdarstellungen des Drehlagers der Abtriebswelle und
- Fig. 7: die Abtriebswelle von Fig. 4 in einer perspektivischen Darstellung von oben, mit einem daneben angeordneten Sensor zur Messung des Schwenkwinkels.

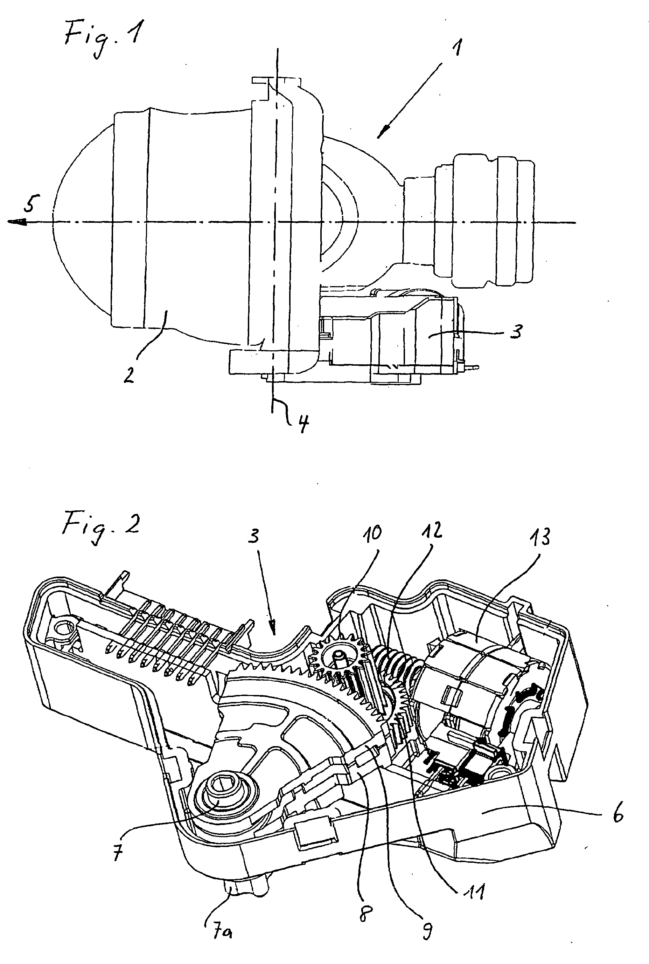

Figur 1 zeigt eine Scheinwerfereinheit 1, die aus einem Scheinwerfer 2, und einem Stellantrieb 3 besteht, mit dessen (nicht dargestellter) Abtriebswelle dieser Scheinwerfer 2 verbunden ist. Die Drehachse der Abtriebswelle ist also gleichzeitig die Schwenkachse 4 des Scheinwerfers 2. Oben wird der Scheinwerfer bevorzugt drehbar aufgehängt, so dass sein Gewicht nicht oder nur teilweise auf der Abtriebswelle des unter ihm angeordneten Stellantriebs lastet. Die Abtriebswelle dient primär der Fixierung des Scheinwerfers in seitlicher Richtung, d.h. in einer zur Schwenkachse 4 orthogonalen Ebene. Die Verbindung des Scheinwerfers 2 mit der Abtriebswelle ist drehfest und sie wird bevorzugt derart gestaltet, dass der Scheinwerfer auf der Abtriebswelle weder radiales Spiel noch Winkelspiel hat.

Die Leuchtrichtung 5 des Scheinwerfers ist zur Schwenkachse 4 geneigt, so dass durch die Betätigung des Stellantriebs die Leuchtrichtung der Scheinwerfereinheit beeinflusst werden kann. Im Beispiel von Figur 1 beträgt der Neigungswinkel 90 Grad, es könnte jedoch auch ein anderer Neigungswinkel verwendet werden und dieser Winkel kann während des Betriebs veränderbar sein, z.B. wenn es sich um einen Fahrzeugscheinwerfer handelt, bei dem zwischen Auf- und Abblendlicht umgeschaltet werden kann.

Eingebaut in ein Fahrzeug ist der Rotationsmotor der Scheinwerfereinheit elektrisch mit einer Steuereinheit verbunden, die aufgrund von Parametern zur aktuellen Fahrsituation automatisch die Leuchtrichtung verändern kann.

Bevorzugt wird der Scheinwerfer so auf der Abtriebswelle befestigt, dass die Achse 5 seines Leuchtkegels die Achse 4 der Abtriebswelle schneidet, so dass der Stellwinkel dieser Welle direkt dem Leuchtwinkel der Scheinwerfereinheit entspricht. Der Leuchtwinkel ist die Stellgrösse und diese lässt sich so durch Messung des Stellwinkels der Abtriebswelle auf einfache Weise ermitteln. Figur 7 zeigt eine bevorzugte Anordnung zur Durchführung dieser Messung.

Figur 2 zeigt das Innenleben des in Figur 1 von aussen dargestellten Stellantriebs 3. Der Antrieb hat ein aus zwei Teilen bestehendes, aus Kunststoff im Spritzgussverfahren hergestelltes, geschlossenes Gehäuse 6, wobei in der Figur lediglich der obere Gehäuseteil dargestellt ist. Normalerweise ist dieser durch einen als Deckel dienenden, zweiten Gehäuseteil verschlossen. In dem Gehäuse befindet sich eine Abtriebswelle 7, die in Gleitlagern drehbar gelagert ist. Diese Lager sind sehr einfach aufgebaut: Die Abtriebswelle weist Lagerbereiche mit zylindrischen Laufflächen auf und im oberen und unteren Gehäuseteil sind (in der Figur nicht sichtbare) Löcher mit leicht grösserem Durchmesser vorgesehen, die als Lagerschalen dienen. Um eine rationelle Fertigung zu ermöglichen wird bevorzugt ein Lagerspiel von mindestens 0.2 mm vorgesehen, das heisst der Durchmesser der Lagerschale ist um mindestens 0.2 mm grösser als jener des korrespondierenden Lagerbereichs der Abtriebswelle. Die im oberen Gehäuseteil vorgesehene Lagerschale verläuft durch die Gehäusewand und das eine Ende 7a der Abtriebswelle ist zur Verbindung mit dem Scheinwerfer durch diese Lagerschale nach aussen geführt.

Die Abtriebswelle 7 ist über ein zweistufiges Reduktionsgetriebe mit der Rotorwelle eines ebenfalls im Gehäuse untergebrachten Rotationsmotors 13 verbunden. Alternativ könnte der Motor auch von aussen an das Gehäuse angeflanscht sein. Die erste Getriebestufe ist ein Schneckengetriebe, mit einer drehfest mit der Rotorwelle verbundenen Schnecke 12 und einem drehbar gelagerten Schneckenrad 11. Ein allfälliges Zahnflankenspiel dieses Schneckenrads ist dank der nachfolgenden, zweiten Getriebestufe an der Abtriebswelle 7 kaum spürbar.

Die zweite (und letzte) Getriebestufe beinhaltet ein neben dem Schneckenrad 11 auf derselben Drehachse angeordnetes und drehfest mit diesem verbundenes Ritzel 10. Das Schneckenrad 11 und das Ritzel 10 sind auf einer starren, direkt oder indirekt am Gehäuse 6 befestigten Achse drehbar gelagert. An Stelle dieser starren Achse könnte jedoch auch eine analog dem vorstehend gesagten in Lagerschalen drehbar gelagerte Welle verwendet werden.

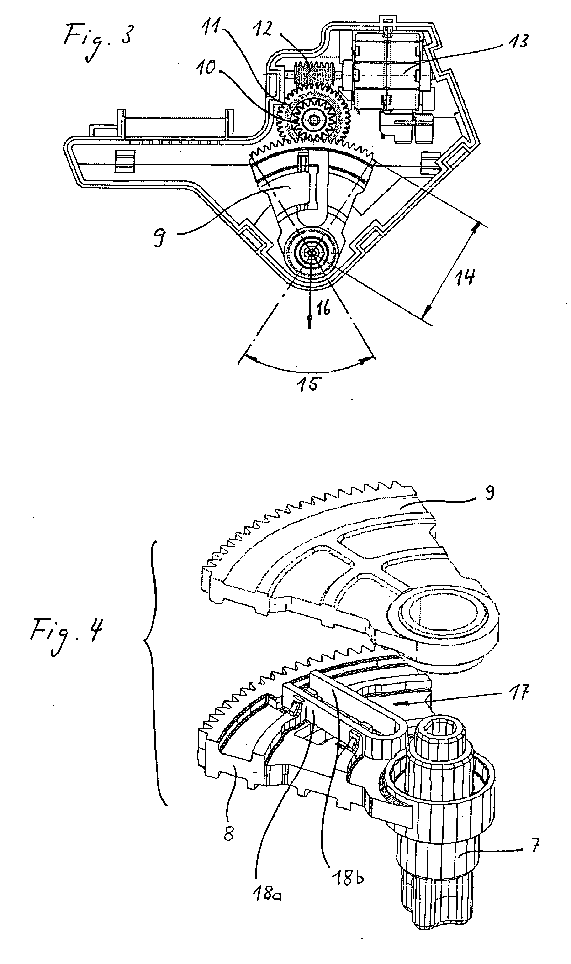

Im Weiteren beinhaltet die zweite Getriebestufe eine drehfest mit der Abtriebswelle 7 verbundene Abtriebsscheibe 8 und eine dazu parallele, frei um dieselbe Achse drehbar gelagerte Spannscheibe 9. Diese Scheiben 8, 9 weisen in einem in Figur 3 bezeichneten, gemeinsamen Wirksektor 15 gleichartige Radialverzahnungen mit demselben Wirkradius 14 auf, die beide mit der Verzahnung des Ritzels 10 in Eingriff stehen. Durch ein in den Figuren 2 und 3 nicht sichtbares, zwischen den beiden Scheiben 8, 9 wirkendes Spannelement sind diese mit gegenläufigen Drehmomenten beaufschlagt, das heisst das Spannelement wirkt auf eine Verdrehung der Spannscheibe in Bezug auf die Abtriebsscheibe hin. Verhindert wird diese Verdrehung durch den in Eingriff stehenden Zahn des Ritzels, der zwischen einer Zahnflanke der Abtriebsscheibe 8 und der gegenüberliegenden Zahnflanke der Spannscheibe 9 eingeklemmt ist. Das Zahnflankenspiel wird so aufgehoben.

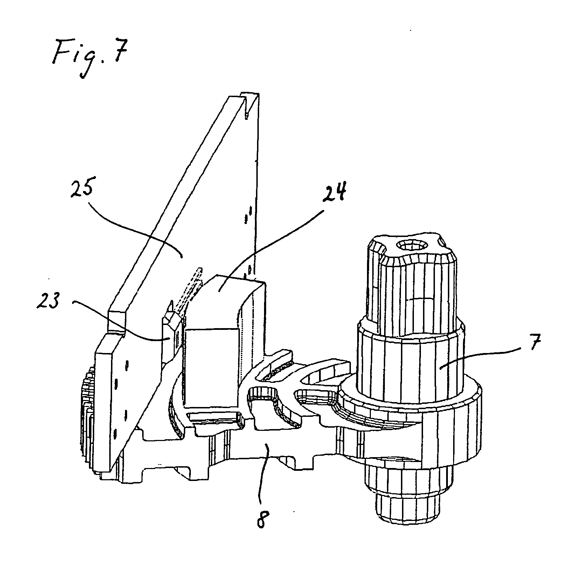

Aus dieser Klemmwirkung resultiert aufgrund der Geometrie der Zahnflanken eine radiale Kraftkomponente 16: die Abtriebsscheibe (und die Spannscheibe) wird vom Ritzel weggedrückt. Durch die damit verbundene, radiale Belastung der Lagerschalen der Abtriebswelle wird das radiale Lagerspiel verringert, was nachstehend (zu den Fig. 5, 6a und 6b) noch näher erläutert wird.

Der Schwenkbereich des Stellantriebs entspricht in diesem Beispiel der Bewegungsfreiheit der Abtriebsscheibe 8, die durch die sie umgebenden Wandabschnitte des Gehäuses 6 eingeschränkt ist. Dieser Schwenkbereich ist kleiner als der Sektorwinkel des Wirksektors 15.

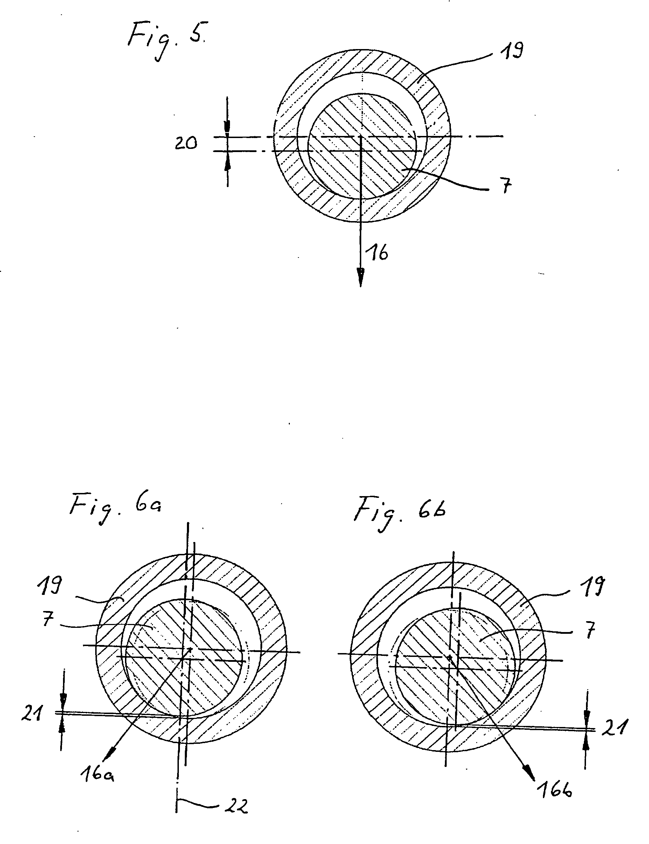

In Figur 4 ist die Spannscheibe 9 in abgehobener Position dargestellt, so dass das zwischen dieser und der Abtriebsscheibe 8 angeordnete Spannelement 17 sichtbar ist. Bevorzugt wird ein U-förmig gebogenes Federblatt verwendet, das mit zur Abtriebsachse gerichtetem Bogen und nach aussen weisenden Schenkeln 18a, 18b zwischen den Scheiben angeordnet ist. Der Schenkel 18a steht mit der Abtriebsscheibe 8 in Eingriff und nach der Montage der Spannscheibe 9 steht der Schenkel 18b des Federblatts mit dieser in Eingriff. Wenn die Verzahnungen der beiden Scheiben 8, 9 aufeinander ausgerichtet sind, was der Fall ist wenn sie beide mit dem Ritzel 10 in Eingriff stehen, ist das Spannelement 16 vorgespannt.

Das Spannelement wird bevorzugt so dimensioniert, dass das durch seine Spannkraft erzeugte Drehmoment grösser ist als das mit dem Antrieb zu übertragende Drehmoment. Es können auch mehrere Spannelemente eingesetzt werden, die gemeinsam die benötigte Spannkraft aufbringen.

Figur 5 zeigt in Schnittdarstellung eine Lagerschale 19, in der die Abtriebswelle 7 gelagert ist. Das Lagerspiel ist stark übertrieben dargestellt, um die Wirkung der radialen Kraftkomponente 16 (siehe auch Fig. 3) zu verdeutlichen: Die Abtriebswelle wird auf die vom Ritzel abgewandte Seite der Lagerschale 18 gedrückt. Die Abtriebsachse verschiebt sich damit um eine Distanz 20, die der Hälfte des Lagerspiels entspricht, aus dem Zentrum der Lagerschale.

Die Figuren 6a und 6b zeigen die Position der Abtriebswelle 7 in ihrer Lagerschale 19 während sie sich (angetrieben durch das Ritzel 10) dreht. Je nach Drehrichtung verändert sich die Richtung der radialen Kraft 16 auf die eine oder andere Seite 16a, 16b. Aufgrund des Lagerspiels verschiebt sich die Achse der Abtriebswelle dabei entlang einer mit der Lagerschale konzentrischen Kreisbahn. Ausgehend von der in Figur 5 gezeigten Normallage verschiebt sich die Abtriebswelle also zunächst lediglich orthogonal zur Kraft 16 und selbst bei etwas stärkerer Auslenkung der Radialkraft 16a, 16b von ihrer Normalrichtung 16 bleibt die Verschiebung 21 der Abtriebswelle in Richtung der Ritzelachse minim. Mit anderen Worten: Das Spiel der Abtriebswelle wird durch die vorgespannte Getriebestufe insbesondere in der durch die Achsen der Abtriebswelle 7 und des Ritzels 10 definierten Ebene 22 stark reduziert. Ein Sensor zur Ermittlung mindestens einer Information zum aktuellen Stellwinkel der Abtriebswelle 7, der jedoch auch in Bezug auf seinen Abstand zu dieser Welle sensitiv ist, wird bevorzugt in dieser Ebene 22 angebracht, da durch das Spiel der Abtriebswelle bedingte Verfälschungen des Messsignals dann am geringsten sind.

Figur 7 zeigt eine bevorzugte Messanordnung dieser Art, bei der als Sensor eine Hallsonde 23 vorgesehen und ein Magnet 24 mechanisch derart mit der Abtriebswelle 7 verbunden ist, dass sein Magnetfeld die Hallsonde mit vom Stellwinkel der Abtriebswelle abhängiger Feldstärke durchflutet. Diese Feldstärke im Bereich der Hallsonde wird auch von deren Abstand zur Abtriebswelle beeinflusst. Die auf einer am Gehäuse 6 befestigten Halteplatte 25 angebrachte Hallsonde 23 ist daher, wie erwähnt, in der durch die Achsen der Abtriebswelle 7 und des Ritzels 10 definierten Ebene angeordnet, so dass durch das Spiel der Abtriebswelle bedingte Störungen des Messsignals auf ein Minimum reduziert sind.

Die Stellwinkel-Messung wird umso genauer, je weiter der Magnet von der Achse der Abtriebswelle 7 entfernt ist. Der Magnet 24 wird daher bevorzugt auf der Abtriebsscheibe 8 und besonders bevorzugt in deren radial äusserer Hälfte, also ausserhalb eines mit der Abtriebsscheibe konzentrischen Kreises mit der Hälfte ihres Durchmessers, angebracht. Der Magnet 24 könnte auch auf der (in Fig. 7 nicht gezeigten) Spannscheibe 9 angebracht sein, deren Verbindung mit der Abtriebswelle jedoch weniger direkt ist und für die Messung des Stellwinkels unnötige Fehlerquellen beinhaltet.

Die Hallsonde 23 wird bevorzugt in geringem Abstand radial ausserhalb der vom Magneten 24 bei der Drehung der Abtriebswelle beschriebenen Bahn angeordnet. Der Magnet 24 wird bevorzugt in der Mitte des Wirksektors der Abtriebsscheibe 8 angeordnet, so dass er in Kombination mit der Hallsonde die Detektion der Mittelstellung des Stellantriebs ermöglicht. Als Magnet 24 wird bevorzugt ein Dauermagnet verwendet, der, wie in der Figur dargestellt, die Form eines Ringsegments aufweist und konzentrisch mit der Abtriebsscheibe auf dieser angebracht ist.

## Patentansprüche

1. Stellantrieb (3) für eine Scheinwerfereinheit (1) für ein Fahrzeug, zum automatischen Schwenken eines Scheinwerfers (2) während des Fahrbetriebs in eine beliebige Position innerhalb eines Schwenkbereichs um eine zur Leuchtrichtung (5) des Scheinwerfers (2) geneigte Schwenkachse, mit einer um eine Abtriebsachse (4) drehbar gelagerten, mit dem Scheinwerfer (2) verbindbaren Abtriebswelle (7), die über ein Reduktionsgetriebe mit der Rotorwelle eines Rotationsmotors (13) in Wirkverbindung steht, wobei das Reduktionsgetriebe eine fest mit der Abtriebswelle (7) verbundene Abtriebsscheibe (8) beinhaltet, die mit einem parallel zur Abtriebsachse (4) drehbar gelagerten und durch den Motor (13) antreibbaren Ritzel in Eingriff steht, **dadurch gekennzeichnet, dass**
die Abtriebsscheibe und eine frei um dieselbe Achse drehbar gelagerte Spannscheibe (9) in einem gemeinsamen Wirksektor (15) gleichartige Radialverzahnungen mit demselben konstanten Wirkradius (14) aufweisen, die beide mit der Verzahnung des Ritzels (10) in Eingriff stehen, und dass diese Scheiben (8, 9) zur Vermeidung von Vibrationen der Abtriebswelle durch mindestens ein zwischen ihnen wirkendes Spannelement (17) mit gegenläufigen Drehmomenten beaufschlagt sind.

2. Stellantrieb nach Anspruch 1, **dadurch gekennzeichnet, dass** der Schwenkbereich nicht mehr als 60 Grad und bevorzugt nicht mehr als 45 Grad beträgt.

3. Stellantrieb nach einem der Ansprüche 1 oder 2, **dadurch gekennzeichnet, dass** die Abtriebswelle einen Durchmesser von nicht mehr als 30 mm aufweist.

4. Stellantrieb nach einem der Ansprüche 1 bis 3, **dadurch gekennzeichnet, dass** das Spannelement (17) ein u-förmig gebogenes Federblatt ist, das mit zur Abtriebsachse gerichtetem Bogen und nach aussen weisenden Schenkeln (18a, 18b) zwischen der Abtriebsscheibe (8) und der Spannscheibe (9) angeordnet ist, wobei jeder der Schenkel (18a, 18b) mit einer der Scheiben in Eingriff steht.

5. Stellantrieb nach einem der Ansprüche 1 bis 4, **gekennzeichnet durch** ein Antriebsgehäuse (6), in dem das Reduktionsgetriebe und vorzugsweise auch der Rotationsmotor (13) untergebracht ist.

6. Stellantrieb nach einem der Ansprüche 1 bis 4, **dadurch gekennzeichnet, dass** die Abtriebswelle (7) in mindestens einem Gleitlager und bevorzugt beidseits der Abtriebsscheibe in je einem Gleitlager drehbar gelagert ist.

7. Stellantrieb nach Anspruch 6, **dadurch gekennzeichnet, dass** die Gleitlager ein radiales Lagerspiel von mindestens 0.05 mm und vorzugsweise ein Spiel von mindestens 0.2 mm aufweisen.

8. Stellantrieb nach Anspruch 5 und einem der Ansprüche 6 oder 7, **dadurch gekennzeichnet, dass** das Gehäuse (6) aus einem oder mehreren Teilen besteht, dass die Gleitlager Lagerschalen aufweisen und dass mindestens eine dieser Lagerschalen integraler Bestandteil eines Gehäuseteils ist.

9. Stellantrieb nach Anspruch 8, **dadurch gekennzeichnet, dass** die in Gehäuseteile integrierten Lagerschalen zusammen mit diesen Gehäuseteilen aus Kunststoff gespritzt sind.

10. Stellantrieb nach einem der Ansprüche 1 bis 9, **dadurch gekennzeichnet, dass** das Ritzel (10) über mindestens eine weitere Getriebestufe, vorzugsweise ein Schneckengetriebe (11, 12), mit der Rotorwelle des Motors (13) gekoppelt ist.

11. Stellantrieb nach einem der Ansprüche 1 bis 10, **dadurch gekennzeichnet, dass** zur Ermittlung mindestens einer Information zum Stellwinkel der Abtriebswelle (7) in der durch die Drehachsen der Abtriebswelle (7) und des Ritzels (10) definierten Ebene ein Sensor angeordnet ist, dessen Signal auch durch seinen Abstand von der Abtriebswelle (7) beeinflusst wird.

12. Stellantrieb nach Anspruch 11, **dadurch gekennzeichnet, dass** der Sensor eine Hallsonde (23) ist und dass ein Magnet mechanisch (23) derart mit der Abtriebswelle (7) verbunden ist, dass sein Magnetfeld die Hallsonde (23) mit vom Stellwinkel der Abtriebswelle (7) abhängiger Feldstärke durchflutet.

13. Stellantrieb nach Anspruch 12, **dadurch gekennzeichnet, dass** der Magnet (24) in der Mitte des Wirksektors (15) der Abtriebsscheibe (7) angeordnet ist, so dass das Signal der Hallsonde (23) die Detektion der Mittelstellung der Abtriebswelle erlaubt.

14. Stellantrieb nach einem der Ansprüche 12 oder 13, **dadurch gekennzeichnet, dass** der Magnet (24) auf der Abtriebsscheibe (8), vorzugsweise in deren radial äusserer Hälfte, befestigt ist.

15. Scheinwerfereinheit (1) mit einem Stellantrieb (3) nach einem der vorhergehenden Ansprüche und mit einem Scheinwerfer (2), der mit zur Achse (4) der Abtriebswelle geneigter Leuchtrichtung (5) fest mit der Abtriebswelle (7) des Antriebs verbunden ist.

16. Scheinwerfereinheit nach Anspruch 15, **dadurch gekennzeichnet, dass** sie eine definierte Ober- und Unterseite hat und der Stellantrieb (3) mit vertikaler Abtriebswelle (7) unter dem Scheinwerfer (2) angeordnet ist.

17. Fahrzeug mit mindestens einer Scheinwerfereinheit (1) nach einem der Ansprüche 15 oder 16 und einer durch Verbindungsmittel mit dem Motor (13) des Stellantriebs (3) verbundenen, für die automatische Anpassung der Leuchtrichtung an die aktuelle Fahrsituation während des Fahrbetriebs vorgesehenen Steuereinheit.

## Claims

1. Actuator (3) for a headlamp assembly (1) for a vehicle, for automatically swivelling a headlamp (2) during vehicle operation to any desired position within a swivelling range about a swivel axis that is inclined with respect to the lighting direction (5) of the headlamp (2), comprising an output shaft (7) that is supported rotatably about an output axis (4) and connectable to the headlamp (2) and is operatively connected via a reduction gear to the rotor shaft of a rotation motor (13), the reduction gear including an output disc (8) that is fixedly connected to the output shaft (7) and is in engagement with a pinion that is rotatably supported in parallel to the output shaft (4) and capable of being driven by the motor (13), **characterised in that**
the output disc and a tensioning disc (9) that is supported freely rotatably about the same axis are provided in a common active sector (15) with radial toothings of the same kind and having the same constant effective radius (14), both of which are in engagement with the teeth of the pinion (10), and **in that** these discs (8, 9) are loaded with opposite torques by at least one tensioning element (17) acting between them in order to prevent vibrations of the output shaft.

2. Actuator according to claim 1, **characterised in that** the swivelling range is not greater than 60 degrees and preferably not greater than 45 degrees.

3. Actuator according to one of claims 1 or 2, **characterised in that** the output shaft has a diameter of no more than 30 mm.

4. Actuator according to one of claims 1 to 3, **characterised in that** the tensioning element (17) is a spring leaf that is bent in u-shape and is arranged between the output disc (8) and the tensioning disc (9) with its bend directed toward the output axis and its legs (18a, 18b) directed to the exterior while each one of the legs (18a, 18b) is in engagement with one of the plates.

5. Actuator according to one of claims 1 to 4, **characterised by** an actuator housing (6) that accommodates the reduction gear and preferably also the rotation motor (13).

6. Actuator according to one of claims 1 to 4, **characterised in that** the output shaft (7) is rotatably supported in at least one plain bearing and preferably in a respective plain bearing on each side of the output disc.

7. Actuator according to claim 6, **characterised in that** the plain bearings have a radial bearing clearance of at least 0.05 mm and preferably a clearance of at least 0.2 mm.

8. Actuator according to claim 5 and one of claims 6 or 7, **characterised in that** the housing (6) consists of one or of several parts, **in that** the plain bearings comprise bearing shells, and **in that** at least one of these bearing shells is an integral part of a housing part.

9. Actuator according to claim 8, **characterised in that** the bearing shells integrated in housing parts are injection-moulded from plastics together with these parts.

10. Actuator according to one of claims 1 to 9, **characterised in that** the pinion (10) is coupled to the rotor shaft of the motor (13) by at least another gear stage, preferably a worm gear (11, 12).

11. Actuator according to one of claims 1 to 10, **characterised in that** for obtaining at least one information regarding the angular position of the output shaft (7) in the plane defined by the rotation axes of the output shaft (7) and of the pinion (10), a sensor is arranged whose signal is also influenced by its distance from the output shaft (7).

12. Actuator according to claim 11, **characterised in that** the sensor is a hall probe (23) and that a magnet is mechanically (23) connected to the output shaft (7) in such a manner that its magnetic field permeates the hall probe (23) with a field intensity that is a function of the angular position of the output shaft (7).

13. Actuator according to claim 12, **characterised in that** the magnet (24) is arranged in the centre of the active sector (15) of the output disc (7) so that the signal of the hall probe (23) allows the detection of the centre position of the output shaft.

14. Actuator according to one of claims 12 or 13, **characterised in that** the magnet (24) is fastened on the output disc (8), preferably in its radially outer half.

15. Headlamp assembly (1) comprising an actuator (3) according to one of the preceding claims and a headlamp (2) that is fixedly connected to the output shaft (7) of the actuator while its lighting direction (5) is inclined with respect to the axis (4) of the output shaft.

16. Headlamp assembly according to claim 15, **characterised in that** it has a defined upper and lower side and that the actuator (3) having a vertical output shaft (7) is arranged under the headlamp (2).

17. Vehicle comprising at least one headlamp assembly (1) according to one of claims 15 or 16 and a control unit that is connected to the motor (13) of the actuator (3) and intended for automatically adapting the lighting direction to the current driving situation during vehicle operation.

## Revendications

1. Actionneur (3) pour une unité de phare (1) pour un véhicule, pour pivoter automatiquement pendant la circulation un phare (2) dans une position souhaitée à l'intérieur d'une plage de pivotement autour d'un axe de pivotement incliné par rapport à la direction d'éclairage (5) du phare (2), comprenant un arbre de sortie (7) supporté de manière rotative autour d'un axe de sortie (4) et pouvant être relié au phare (2), qui est fonctionnellement relié par un engrenage de réduction à l'arbre rotor d'un moteur de rotation (13), ledit engrenage de réduction incluant un disque de sortie (8) qui est fixé à l'arbre de sortie (7) et s'engrène avec un pignon supporté de manière rotative parallèlement à l'axe de sortie (4) et pouvant être entraîné par le moteur (13), **caractérisé en ce que**
le disque de sortie et un disque de tension (9) librement supporté de manière rotative autour du même axe, présentent dans un secteur actif (15) des dentures radiales du même genre et ayant le même rayon effectif (14) constant, qui s'engrènent toutes les deux dans la denture du pignon (10), et que des couples opposés sont appliqués à ces plateaux (8, 9) par au moins un élément de tension (17) agissant entre eux afin d'éviter des vibrations de l'arbre de sortie.

2. Actionneur selon la revendication 1, **caractérisé en ce que** la plage de pivotement ne dépasse pas 60 degrés et préférablement ne dépasse pas 45 degrés.

3. Actionneur selon l'une des revendications 1 ou 2, **caractérisé en ce que** l'arbre de sortie a un diamètre ne dépassant pas 30 mm.

4. Actionneur selon l'une des revendications 1 à 3, **caractérisé en ce que** l'élément de tension (17) est une lame de ressort recourbée en forme de u qui est agencée entre le disque de sortie (8) et le disque de tension (9) avec le coude tourné vers l'axe de sortie et les branches (18a, 18b) tournées vers l'extérieur, chacune des branches (18a, 18b) étant en engagement avec un des plateaux.

5. Actionneur selon l'une des revendications 1 à 4, **caractérisé par** un boîtier d'actionneur (6) dans lequel est logé l'engrenage de réduction et préférablement aussi le moteur de rotation (13).

6. Actionneur selon l'une des revendications 1 à 4, **caractérisé en ce que** l'arbre de sortie (7) est rotativement logé dans au moins un palier lisse et préférablement dans un palier lisse de chaque côté du disque de sortie.

7. Actionneur selon la revendication 6, **caractérisé en ce que** les paliers lisses présentent un jeu de coussinet radial d'au moins 0.05 mm et préférablement un jeu d'au moins 0.2 mm.

8. Actionneur selon la revendication 5 et l'une des revendications 6 ou 7, **caractérisé en ce que** le boîtier (6) est composé d'une ou de plusieurs parties, que les paliers lisses comportent des coquilles de coussinet, et qu'au moins une de ces coquilles de coussinet est une partie intégrante d'une partie du boîtier.

9. Actionneur selon la revendication 8, **caractérisé en ce que** les coquilles de coussinet intégrées dans des parties du boîtier sont injectées en matériau synthétique conjointement à ces parties du boîtier.

10. Actionneur selon l'une des revendications 1 à 9, **caractérisé en ce que** le pignon (10) est accouplé à l'arbre rotor du moteur (13) par au moins un étage d'engrenage supplémentaire, préférablement un engrenage à vis sans fin (11, 12).

11. Actionneur selon l'une des revendications 1 à 10, **caractérisé en ce que** pour détecter au moins une information sur la position angulaire de l'arbre de sortie (7), un capteur est agencé dans le plan défini par les axes de rotation de l'arbre de sortie (7) et du pignon (10), dont le signal est également influencé par sa distance de l'arbre de sortie (7).

12. Actionneur selon la revendication 11, **caractérisé en ce que** le capteur est une sonde de Hall (23) et qu'un aimant est mécaniquement (23) relié à l'arbre de sortie (7) de telle manière que son champ magnétique traverse la sonde de Hall (23) avec une intensité du champ qui est une fonction de la position angulaire de l'arbre de sortie (7).

13. Actionneur selon la revendication 12, **caractérisé en ce que** l'aimant (24) est agencé au centre du secteur actif (15) du disque de sortie (7), de sorte que le signal de la sonde de Hall (23) permet la détection de la position centrale de l'arbre de sortie.

14. Actionneur selon l'une des revendications 12 ou 13, **caractérisé en ce que** l'aimant (24) est fixé sur le disque de sortie (8), préférablement dans la moitié radialement extérieure de celui-ci.

15. Unité de phare (1) comprenant un actionneur (3) selon l'une des revendications précédentes et un phare (2) qui est fixé à l'arbre de sortie (7) de l'actionneur et dont la direction d'éclairage (5) est inclinée par rapport à l'axe (4) de l'arbre de sortie.

16. Unité de phare selon la revendication 15, **caractérisée en ce qu'**elle a un côté supérieur et inférieur définis et que l'actionneur (3) ayant un arbre de sortie (7) vertical est agencé sous le phare (2).

17. Véhicule comprenant au moins une unité de phare (1) selon l'une des revendications 15 ou 16 et une unité de commande destinée à l'adaptation automatique de la direction d'éclairage à la situation de conduite actuelle pendant la circulation, laquelle est reliée au moteur (13) de l'actionneur (3) par des moyens de liaison.
